# EUROPÄISCHE PATENTSCHRIFT

(11) **EP 3 027 443 B1**
(45) Veröffentlichungstag und Bekanntmachung des Hinweises auf die Patenterteilung: **19.02.2020**
(21) Anmeldenummer: 14741835.4
(22) Anmeldetag: 15.07.2014
(51) Int. Cl.: B60H 1/34

(54) **LUFTLEITELEMENT**
AIR-GUIDING ELEMENT
ÉLÉMENT DE GUIDAGE D'AIR

(30) Priorität: 29.07.2013 DE 102013108059
(43) Veröffentlichungstag der Anmeldung: 08.06.2016
(73) Patentinhaber: VOLKSWAGEN AG, 38440 Wolfsburg (DE)
(72) Erfinder: UHLENBUSCH, Olaf, 96275 Marktzeuln (DE); GRÜDL, Alexander, 96317 Kronach (DE)
(86) Internationale Anmeldenummer: PCT/EP2014/065070
(87) Internationale Veröffentlichungsnummer: WO 2015/014596

(56) Entgegenhaltungen:
- JP-A- H1 114 132
- JP-U- H0 166 545
- JP-U- H0 443 754
- JP-U- H02 143 209
- US-A- 5 176 571

## Beschreibung

Die vorliegende Erfindung betrifft ein Luftleitelement aus einem flexiblen Material, wobei das Luftleitelement einen ersten in einem Gehäuse gelagerten Endabschnitt aufweist. Derartige Luftleitelemente können beispielsweise in Luftausströmern für Kraftfahrzeuge verwendet werden.

Allgemein dienen Luftleitelemente zum Steuern der ausströmenden Luft in horizontalter und/oder vertikaler oder einer dazwischenliegenden Richtung.

Aus DE 100 10 688 A1 ist ein Luftausströmer bekannt, welcher ein Luftleitelement aufweist, das biegsam ausgebildet ist.

Aus EP 2 266 824 B1 ist ferner ein Luftdurchsatzelement bekannt, das ein vorder- und rückseitiges Gehäuse mit darin angeordneten Luftleitelementen aus sich in Längsrichtung des Gehäuses erstreckenden Wänden aus flexiblem Material aufweist. Die Wände sind über Stellelemente aus ihrer geometrischen Grundform in eine gewünschte abgewandelte Form durch Einwirken einer Druck- und/oder Schiebekraft und/oder eines Drehmomentes verbringbar.

Bei den in EP 2 266 824 B1 offenbarten Luftleitelementen sind die flexiblen Wände derart in einem Gehäuse angeordnet, dass diese entweder durch Zusammendrücken gestaucht oder gekippt werden, wobei in diesem speziellen Fall die Wände dafür schräg in dem Gehäuse angeordnet sind. Die in dem europäischen Patent offenbarte technische Lehre weist jedoch den Nachteil auf, dass mittels dieser Wände nur eine begrenzte Steuerung der ausströmenden Luft möglich ist. Ferner weist die darin beschriebene Ausführung Nachteile im Hinblick auf die Verstellung von Horizontallamellen bzw. Wänden bei sogenannten Breitbandausströmern auf, da zum Verstellen der Richtung der ausströmenden Luft die Wände entsprechend großflächig dimensioniert sein (insbesondere in Richtung der Mittenachse eines Luftausströmers) und aufwendige Verstellmittel vorgesehen sein müssten, um auch große Ablenkungen im Bereich > 50 Grad in unmittelbarer Umgebung des Luftaustrittsbereichs eines Luftausströmers zu erzielen.

Die US 5 176 571 A beschreibt einen Luftauströmer mit flexiblen Luftleitelementen, die untereinander wirkverbunden mittels eines gemeinsamen Stabelements durch Biegung verstellbar sind.

Die JP H01 66545 U offenbart einen Luftausströmer mit untereinander wirkverbundenen Luftleitelementen, welche jeweils einenends in einem Gehäuse des Luftausströmers schwenkgelagert und mittels eines gemeinsamen Verstellelements gleichsinnig schwenkbar sind.

Die JP H02 143209 U beschreibt einen Luftausströmer mit einem rohrförmigen Luftführungskanal, welcher beidenends eingespannt, jedoch derart flexibel ausgebildet ist, dass dieser zur Umlenkung eines Luftstroms zwischen den beiden Einspannstellen verstellbar bzw. auslenkbar ist.

Die JP H11 14132 A beschreibt einen Luftführungskanal mit elastisch verformbaren Luftleitelementen, in deren mittlerem Bereich ein Bedienelement angeordnet ist, welches geeignet ist, die Luftdurchtrittsfläche respektive den Querschnitt des Luftführungskanals zu verändern.

Aus der JP H04 43754 U ist ein Luftleitelement aus einem flexiblen Material mit einem in einem Gehäuse gelagerten ersten und zweiten Endabschnitt bekannt, wobei ein Endabschnitt gehäusefest und der andere Endabschnitt in Luftströmungsrichtung gesehen infolge Krafteinwirkung entlang des Gehäuses derart verschiebbar ausgebildet ist, dass sich das Luftleitelement verformt und nach Beendigung der Krafteinwirkung selbsttätig in seine Ausgangsstellung zurückkehrt.

Aufgabe der vorliegenden Erfindung ist es, einen Luftausströmer sowie ein Luftleitelement anzugeben, welcher einfach gesteuert werden kann und ein relativ großer Ablenkungsbereich durch einen Luftausströmer und ein Luftleitelement bereitgestellt wird, das fließend übergehende Luftleitflächen aufweist.

Erfindungsgemäß wird die Aufgabe durch ein Luftleitelement mit den in Anspruch 1 angegebenen technischen Merkmalen und einen Luftausströmer mit den in Anspruch 13 angegebenen technischen Merkmalen gelöst.

Vorteilhafte Weiterbildungen der Erfindung sind in den Unteransprüchen im Detail angegeben.

Bei einem erfindungsgemäßen Luftleitelement aus einem flexiblen Material ist vorgesehen, dass das Luftleitelement einen ersten in dem Gehäuse gelagerten Endabschnitt aufweist und mindestens der dem ersten Endabschnitt gegenüberliegende zweite Endabschnitt derart abgestützt ist, dass durch Einwirkung mindestens einer Kraftkomponente auf einen Bereich des Luftleitelementes zwischen dem ersten Endabschnitt und dem zweiten Endabschnitt sich das Luftleitelement mindestens in diesem Bereich verformt, wobei sich der zweite Endabschnitt verlagert und das Luftleitelement nach Beendigung der Einwirkung der Kraftkomponente selbsttätig (bzw. durch entsprechenden Antrieb) in seine Ausgangsstellung zurückkehrt. Ferner ist vorgesehen, dass zum Verformen des Luftleitelements mindestens zwei Betätigungselemente beabstandet zueinander in oder an dem Luftleitelement zwischen dem ersten Endabschnitt und dem zweiten Endabschnitt angeordnet sind und dass Lagerabschnitte der Betätigungselemente aus dem Luftleitelement hervorstehen und mit mindestens einem Verstellmittel oder einer Verstellvorrichtung verbunden sind. Dadurch kann einfach eine Verformung des Luftleitelements erfolgen.

Das flexible Material des Luftleitelements weist eine derart bemessene Widerstandskraft gegen eine Verformung auf, dass das Luftleitelement nach dem Einwirken der Kraftkomponente seine ursprüngliche Ausrichtung wieder einnimmt. Daher ist beispielsweise im Vergleich zu konventionellen Lamellen, welche einen steifen Körper aufweisen, keine Rückstellkraft erforderlich, um das Luftleitelement in seinen unverformten Zustand zu verbringen. Wenigstens muss das Luftleitelement nach dem Einwirken der Kraftkomponente zur Rückstellung in seine Ausgangsposition (Neutralstellung) nicht erneut durch eine Einrichtung betätigt werden. Die Einwirkung einer Kraftkomponente zur Rückstellung kann aber trotzdem vorgesehen sein, wenn eine Rückstellung nicht unkontrolliert erfolgen soll; dies kann beispielsweise mittels einer motorischen Ansteuerung realisiert werden.

Ferner soll in bestimmten Fällen das Luftleitelement nach dem Verstellen in der verbrachten Stellung verbleiben, da diese Stellung bewusst gewählt wurde. Um das Luftleitelement auf Grund der Widerstandskraft gegen eine Verformung in der Position zu halten, welche gewählt worden ist, können die Einrichtungen zum Verstellen der Ausrichtung bzw. zum Aufbringen der Kraftkomponente so ausgebildet sein, dass diese ihre Krafteinwirkung beibehalten. Die Beibehaltung kann dadurch erreicht werden, dass die Einrichtungen in der gewählten Position verbleiben.

Die Widerstandskraft gegen eine Verformung ist ferner so zu bemessen, dass die zum Verformen erforderliche Energie nicht einen Betrag übersteigt, der unverhältnismäßig ist oder entsprechend komplexe Einrichtungen erfordert. So können Einrichtungen zum Bereitstellen der Einwirkung mindestens einer Kraftkomponente so ausgebildet sein, dass diese eine eingestellte Position selbsttätig halten (beispielsweise über Verrasten oder elektrisch).

Die flexible Ausgestaltung des Luftleitelementes weist ferner den Vorteil auf, dass im Vergleich zum Stand der Technik die Richtung einer ausströmenden Luft verschiedenartig einstellbar ist, ohne dass darüber hinaus eine Vielzahl von Lamellen verschwenkt werden muss.

Dies bietet auch Vorteile im gestalterischen Bereich, wobei der erste Endabschnitt des Luftleitelementes im Wesentlichen stationär im Luftaustrittsbereich eines Luftausströmers angeordnet ist und die Ablenkung des ausströmenden Luftstromes über den flexiblen Bereich des Luftleitelementes erfolgt, der beispielsweise in dem Gehäuse des Luftausströmers aufgenommen und daher von außen nicht sichtbar ist.

Die Krafteinwirkung kann ferner über eine Verstelleinrichtung erfolgen. Eine Verstelleinrichtung kann direkt auf den Bereich zwischen dem ersten Endabschnitt und dem zweiten Endabschnitt wirken. So kann das Luftleitelement im Wesentlichen als flächiges Luftleitelement ausgebildet sein, wobei dieses in Längsrichtung eine größere Erstreckung aufweist als in der Breite. Die Höhe des Luftleitelementes ist relativ gering (z.B. wenige Millimeter). Dadurch kann das Luftleitelement einfach verformt werden. In weiteren Ausführungsformen wird über eine Verstelleinrichtung eine Kraftkomponente, beispielsweise motorisch, in Längsrichtung parallel zu dem ersten Endabschnitt auf das Luftleitelement aufgebracht. Solange die Verstelleinrichtung ihre Position beibehält, befindet sich das Luftleitelement in einem verformten Zustand und hält diesen auch bei (bspw. weist ein Elektromotor ein entsprechendes Haltemoment auf). Bewegt sich die Verstelleinrichtung zurück in ihre Ausgangsposition (bspw. durch erneute Ansteuerung des Elektromotors) und übt daher keine Kraft auf das Luftleitelement mehr aus, erfolgt durch das Luftleitelement aufgrund der Ausgestaltung des Luftleitelements aus einem flexiblen Material die Rückstellung selbsttätig.

In weiteren Ausführungen von Luftleitelementen erfolgt die Einbringung einer Kraftkomponente im Wesentlichen mittig (sowohl in Längsrichtung als auch in der Breite) bei einem flächigen Luftleitelement.

Darüber hinaus kann der zweite Endabschnitt in einer Aufnahme verschiebbar gelagert sein. Der erste Endabschnitt ist stationär gelagert, wobei durch die Verformung des Luftleitelementes der zweite Endabschnitt eine Bewegung relativ zu dem ersten Endabschnitt erfährt. Über die Aufnahme kann der zweite Endabschnitt daher in Abhängigkeit der Verformung verschoben werden. Dadurch ist sichergestellt, dass der zweite Endabschnitt eine bestimmte Position einnimmt und beibehält. Unkontrollierte Verformungen seitens des Luftleitelements werden daher ausgeschlossen.

Der erste Endabschnitt kann über ein erstes Lagerelement gelagert sein, wobei das erste Lagerelement in mindestens einer Aufnahme verschwenkbar oder das erste Lagerelement drehbar in oder an dem ersten Endabschnitt gelagert ist. So kann das erste Lagerelement in einer Aufnahme des Gehäuses eines Luftausströmers gelagert sein und in Bezug auf das Luftleitelement starr bzw. unbeweglich sein. Bei einem Verformen des Luftleitelementes ist es daher möglich, dass das erste Lagerelement sich relativ zu der Aufnahme des Gehäuses verschwenkt. Alternativ oder zusätzlich kann der erste Endabschnitt so ausgebildet sein, dass ein sich durch den ersten Endabschnitt erstreckendes Lagerelement in dem ersten Endabschnitt drehbar aufgenommen ist.

Die Betätigungselemente können stabförmig ausgebildet sein. Werden die Betätigungselemente, beispielsweise über Mittel in eine Richtung bewegt, wobei die Betätigungselemente oder Stäbe das Luftleitelement seitlich überstehen, so bewirken die Betätigungselemente eine Verformung des Luftleitelementes.

Hierzu können die Betätigungselemente Lagerabschnitte aufweisen, wobei mindestens die Lagerabschnitte im Wesentlichen parallel zu dem ersten Endabschnitt verlaufen. Ferner können auch die Betätigungselemente parallel zu dem ersten Endabschnitt verlaufen.

Bevorzugt stehen die Lagerabschnitte der Betätigungselemente aus dem Luftleitelement hervor und sind mit mindestens einem Verstellmittel oder einer Verstelleinrichtung verbunden. So können beidseitig des Luftleitelementes die Lagerabschnitte aus dem Luftleitelement hervorstehen. Dadurch kann einfach eine Verformung des Luftleitelements erfolgen. Es kann hierzu beidseitig des Luftleitelements jeweils ein Verstellmittel vorgesehen sein, wobei beide Verstellmittel jeweils mit den an der entsprechenden Seite des Luftleitelements hervorstehenden Lagerabschnitten der Betätigungselemente verbunden sind.

Wird beispielsweise ein Betätigungselement über die Lagerabschnitte nach oben und ein zweites Betätigungselement über dessen Lagerabschnitte nach unten bewegt, so ergibt sich eine Verformung des Luftleitelementes im Wesentlichen in einer sogenannten S-Kurve.

Hierzu kann das mindestens eine Verstellmittel ein um eine parallel zu dem ersten Endabschnitt verlaufende Drehachse drehbares Verstellmittel sein, wobei zwei Lagerabschnitte von den mindestens zwei Betätigungselementen beabstandet zueinander mit dem Verstellmittel verbunden sind und mindestens ein Lagerabschnitt beabstandet zu der Drehachse an dem drehbaren Verstellmittel angeordnet ist. Das drehbare Verstellmittel kann als sogenanntes Bedienrad ausgebildet oder mit einem solchen Bedienrad gekoppelt sein. Wird das Bedienrad verdreht, so erfolgt über die Verbindung der Lagerabschnitte der zwei Betätigungselemente mit dem Bedienrad eine Verformung des Luftleitelements. Es können auch weitere Betätigungselemente mit dem drehbaren Verstellmittel verbunden sein, wobei die Lagerabschnitte, über welche die Betätigungselemente mit dem drehbaren Verstellmittel verbunden sind, im nicht verformten Zustand des Luftleitelementes im Wesentlichen in einer Ebene liegen. Wird nun das drehbare Verstellmittel betätigt, begeben sich auf Grund der flexiblen Ausgestaltung des Luftleitelementes verschiedene Verformungen. In Abhängigkeit der Ausgestaltung bzw. Verbindung der Lagerabschnitte mit dem Verschiebemittel können verschiedene Austrittswinkel eines Luftstromes erreicht werden. Ferner wird der Austrittswinkel des Luftstromes über den Grad der Verformung in Abhängigkeit der Stellung des Bedienrads eingestellt.

In weiteren Ausführungsformen weist das Luftleitelement mindestens ein(e) im Wesentlichen parallel zu dem ersten Endabschnitt verlaufende Rippe, Fuge, Versteifungselement und/oder Einlage auf. Die Einlage kann dazu dienen, dass Luftleitelement in verschiedenen Bereichen starr auszubilden, was eine Verformung des Luftleitelementes in diesem Bereich erschwert oder verhindert. Ferner können Fugen oder Rippen die Verformung des Luftleitelementes derart beeinflussen, dass an diesen die Verformung zuerst oder leichter eintritt bzw. erschwert wird und erst später eintritt.

Eine Einlage kann sich auch im Wesentlichen über die gesamte Fläche des Luftleitelements erstrecken. Die Einlage kann somit die Eigenschaften des Luftleitelements im Hinblick auf die Verformbarkeit beeinflussen.

In weiteren Ausführungsformen ist in mindestens der einen Fuge ein Betätigungselement eingesetzt oder liegt an den durch die Fuge gebildeten Wänden an, so dass die Kraftkomponente über die Fuge in das Luftleitelement eingebracht wird. Dabei kann vorteilhafterweise bei einer Verformung der Scheitel der Verformung (Bereich des maximalen Abstands des Luftleitelements gegenüber unverformten Zustand) im Bereich der Fuge gebildet werden.

Das Luftleitelement kann ferner auch so ausgebildet sein, dass es einen Schichtaufbau, bestehend aus mindestens zwei Schichten, aufweist. Die Schichten können miteinander verklebt oder anderweitig miteinander verbunden sein. Auch können die Schichten des Luftleitelementes so ausgebildet sein, dass sich diese in einem (ersten oder zweiten) Endabschnitt verbinden bzw. verbunden sind und einen Keil mit oder ohne Einlageteil oder einen gasgefüllten Raum dazwischen aufweisen.

Eine Schicht aus einem solchen Schichtaufbau des Luftleitelements kann Kohlefaser- und/oder Glasfaserelemente aufweisen.

Ferner kann das Luftleitelement mindestens eine Schicht aufweisen, welche die Oberfläche des Luftleitelements entsprechend gewünschter Eigenschaften des Luftleitelements ausbildet. Auch kann das Luftleitelement im ersten oder zweiten Endabschnitt eine reibungsreduzierende Oberfläche aufweisen, was beispielsweise über eine entsprechende Beschichtung (beispielsweise Teflon) erreicht werden kann.

Die Beschichtung des Luftleitelements kann an einer Seite, im ersten Endabschnitt und/oder im zweiten Endabschnitt vorliegen, wobei darüber hinaus Strukturen oder Formen auf der mindestens einen Seite oder dem ersten bzw. zweiten Endabschnitt vorgesehen sein können, welche eine turbulente Verwirbelung der Luft oder eine bestimmte Ausströmung bewirken.

Darüber hinaus kann das Luftleitelement an dem ersten Endabschnitt und/oder dem zweiten Endabschnitt ein Abschlusselement aufweisen. Hierbei kann ferner das erste Lagerelement in dem Abschlusselement aufgenommen sein, welches sich im ersten Endabschnitt befindet.

Da bei der Verformung des Luftleitelementes auf Grund der stationären Lagerung des ersten Endabschnitts der zweite Endabschnitt eine Verlagerung erfährt, ist in weiteren Ausführungen vorgesehen, dass der zweite Endabschnitt über mindestens ein drehbares zweites Lagerelement abgestützt oder der zweite Endabschnitt zwischen zwei drehbar gelagerten zweiten Lagerelementen abgestützt ist. Das mindestens eine zweite Lagerelement kann hierbei eine Rolle oder eine Walze sein. Erfährt das Luftleitelement eine Verformung, so wird der zweite Endabschnitt beispielsweise zwischen zwei Rollen oder zwei Walzen entsprechend dem Grad der Verformung geführt. Ferner kann hierüber die Reibung beispielsweise gegenüber einer Aufnahme reduziert werden. Um jedoch auch bei einer Aufnahme die Reibung des zweiten Endabschnittes des Luftleitelements zu reduzieren, können sowohl der zweite Endabschnitt als auch die Aufnahme entsprechend reibungsreduzierend oberflächenbeschichtet oder ausgebildet sein.

Das Abschlusselement des ersten Endabschnitts und/oder des zweiten Endabschnitts kann aus einem Kunststoff, Metall, einer Metalllegierung oder einem beschichteten Kunststoff bestehen. Insbesondere eine Chrombeschichtung auf einem aus Kunststoff bestehenden Abschlusselement ist leicht zu erzielen und bietet ein ansehnliches optisches Erscheinungsbild des Luftleitelements in Blickrichtung auf einen Luftausströmer. Ferner kann in dem Abschlusselement das erste Lagerelement aufgenommen sein, wobei die Ausgestaltung einer Aufnahme für das erste Lagerelement bei einem aus Kunststoff, Metall oder einer Metalllegierung bestehenden Abschlusselement einfach (beispielsweise Spritzgießen) herstellbar ist.

Mindestens ein Betätigungselement kann einen nicht linearen Verlauf aufweisen, der sich im Zustand des Luftleitelements ohne Krafteinwirkung im Wesentlichen in dem Luftleitelement oder in einer Ebene parallel zu dem Luftleitelement erstreckt. Ein solches Betätigungselement weist beispielsweise Bögen auf, wobei im unbetätigten Zustand des Luftleitelements dieses seine flächige ursprüngliche Ausrichtung beibehält. Wird jedoch über eine Verstelleinrichtung oder ein Verstellmittel das nicht linear ausgebildete Betätigungselement verdreht, so bewirkt die spezielle Form des Betätigungselementes, welches sich in oder an dem Luftleitelement befindet, im Zusammenspiel mit der stationären Lagerung des ersten Endabschnittes und der flexiblen Ausgestaltung des Luftleitelements eine sogenannte "Berg und Tal"-Struktur, welche vorteilhafterweise die Regulierung der Menge der ausströmenden Luft beeinflusst. Ferner können hierbei im Zusammenspiel mehrerer Betätigungselemente sowohl die Richtung als auch die Menge der ausströmenden Luft eingestellt werden. Auch ist es möglich, beispielsweise mittels zweier Betätigungselemente den ausströmenden Luftstrom, beispielsweise aus einem Luftausströmer, vollständig abzuregeln, so dass keine Luft mehr austritt.

Das Luftleitelement kann mit mindestens einem weiteren Luftleitelement über eine Koppeleinrichtung, ein Verstellmittel oder eine Verstelleinrichtung verbunden sein. Als Koppeleinrichtung sind beispielsweise sogenannte Koppelstangen in weiteren Ausführungsformen vorgesehen, welche bereits für starre Lamellen bekannt sind.

Ferner kann das Luftleitelement oder mindestens eine Schicht des Luftleitelements aus einem dehnbaren Stoff oder einem gummiartigen Material bestehen. Der dehnbare Stoff ist so ausgebildet, dass er flexibel ist und vielfältig verformt werden kann, jedoch keine oder nur eine geringe Durchströmung von Luft durch den Stoff hinzulässt. Weitere Vorteile ergeben sich hierbei in Bezug auf Leichtbau und Akustik eines Luftleitelements.

Wie bereits in Bezug auf die vorstehend genannten Beispiele erläutert, kann das Luftleitelement vorteilhafterweise ein Luftleitelement eines Luftausströmers für ein Kraftfahrzeug sein. Jedoch können derartige Luftleitelemente auch in stationären Einrichtungen in Gebäuden oder auch bei anderen Fahrzeugtypen (Flugzeuge, Schiffe, Busse, Züge, etc.) verwendet werden.

Ein erfindungsgemäßer Luftausströmer für ein Kraftfahrzeug weist mindestens ein Luftleitelement auf, welches mindestens eines der vorstehend genannten Merkmale und Ausbildungen umfasst. Die vorstehend genannten Vorteile treffen daher auch für einen erfindungsgemäßen Luftausströmer zu.

Die Einstellung der Krafteinwirkung auf das Luftleitelement kann manuell oder motorisch erfolgen. Auch kann die Krafteinwirkung auf das mindestens eine Betätigungselement über eine Verstelleinrichtung im Wesentlichen von oben und/oder unten erfolgen, wobei auch eine seitliche Krafteinwirkung in bestimmten Ausführungen erfolgen kann. Dies kann insbesondere bei der Ausgestaltung eines Luftleitelements mit Fugen oder Rippen ohne aufwendige Einbringung von Betätigungselementen in das Luftleitelement erfolgen.

In weiteren Ausführungen weist ein Luftausströmer ein flexibles Gehäuse auf. Das flexible Gehäuse kann weiter in einer Aufnahme aufgenommen sein, so dass das flexible Gehäuse beispielsweise in Blick auf ein Fahrzeugarmaturenbrett nicht sichtbar ist. Bei dem flexiblen Gehäuse ist mindestens ein Teil so ausgebildet, dass dieses ein flexibles Luftleitelement bildet oder mit einem solchen verbunden ist. Vorzugsweise sind ein Luftleitelement und ein Gehäuseteil einstückig (zum Beispiel über ein Filmscharnier; hart/weiche Kunststoffverbindung im 2K-Verfahren) ausgebildet. Es kann auch ein separates Teil verwendet werden, welches mit den Bestandteilen des Luftausströmers (Gehäuse, Luftleitelement) verbunden wird.

Die zweiten Endabschnitte können zur Verlagerung bei einer Krafteinwirkung in Führungen verschieblich aufgenommen sein, wobei zur Reduzierung der Reibungskräfte innerhalb der Führungen der oder die zweite(n) Endabschnitt(e) des Luftleitelementes oder eine Aufnahme mit einem Gleitlack, einem Überzug (z.B. Teflon) oder Spezialkunststoffen beschichtet sind.

Weiterbildungen der Erfindung sowie Ausgestaltungsmöglichkeiten ergeben sich aus der nachfolgenden Figurenbeschreibung.

Die in den Figuren gezeigten Ausführungsbeispiele weisen beispielhaften Charakter auf und sind daher nicht einschränkend zu verstehen und können bei zu implementierenden Ausführungsformen vom Veranschaulichten abweichen.

Die Ausführungsformen der Figuren 1 bis 6 stehen nicht unter dem Gegenstand der Erfindung. In den Zeichnungen zeigt:
- Fig. 1: eine schematische Ansicht eines Luftausströmers mit flexiblen Luftleitelementen in einem verformten und einem nicht verformten Zustand der Luftleitelemente gem. einer ersten Ausführungsform;
- Fig. 2: eine schematische Ansicht eines Luftausströmers mit flexiblen Luftleitelementen in einem verformten und einem nicht verformten Zustand der Luftleitelemente gem. einer zweiten Ausführungsform;
- Fig. 3: eine schematische Ansicht eines Luftausströmers mit flexiblen Luftleitelementen in einem verformten und einem nicht verformten Zustand der Luftleitelemente gem. einer dritten Ausführungsform;
- Fig. 4: eine schematische Ansicht eines Luftausströmers mit flexiblen Luftleitelementen in einem verformten und einem nicht verformten Zustand der Luftleitelemente gem. einer vierten Ausführungsform;
- Fig. 5: eine schematische Ansicht eines Luftausströmers mit flexiblen Luftleitelementen in einem verformten und einem nicht verformten Zustand der Luftleitelemente gem. einer fünften Ausführungsform;
- Fig. 6: eine schematische Ansicht eines Luftausströmers mit flexiblen Luftleitelementen in einem verformten und einem nicht verformten Zustand der Luftleitelemente gem. einer sechsten Ausführungsform;
- Fig. 7: eine schematische Ansicht eines Luftausströmers mit flexiblen Luftleitelementen in einem verformten und einem nicht verformten Zustand der Luftleitelemente gem. einer siebten Ausführungsform;
- Fig. 8a: eine schematische Ansicht eines Betätigungselements;
- Fig. 8b: eine schematische Schnittansicht eines Luftleitelements;
- Fig. 8c: eine schematische Schnittansicht eines Luftleitelements mit Fugen;
- Fig. 8d: eine schematische Schnittansicht eines Luftleitelements mit einem Versteifungselement;
- Fig. 8e: eine schematische Schnittansicht eines Luftleitelements mit mehreren Schichten;
- Fig. 8f: eine schematische Schnittansicht eines Luftleitelements mit einem zwischen zwei Walzen gelagerten Endabschnitt; und
- Fig. 9: eine schematische Ansicht eines Verstellmittels und eines Luftleitelements in einem verformten und einem nicht verformten Zustand des Luftleitelements gem. einer achten Ausführungsform.

In den Figuren entsprechen mit den gleichen Bezugszeichen versehene Teile im Wesentlichen einander, solange nichts anderes angegeben ist.

Ferner wird darauf verzichtet, Bestandteile darzustellen und zu beschreiben, welche zum Verständnis der beschriebenen technischen Lehre nicht erforderlich sind.

Ausführungsform 1, die nicht unter dem Gegenstand der Erfindung steht:

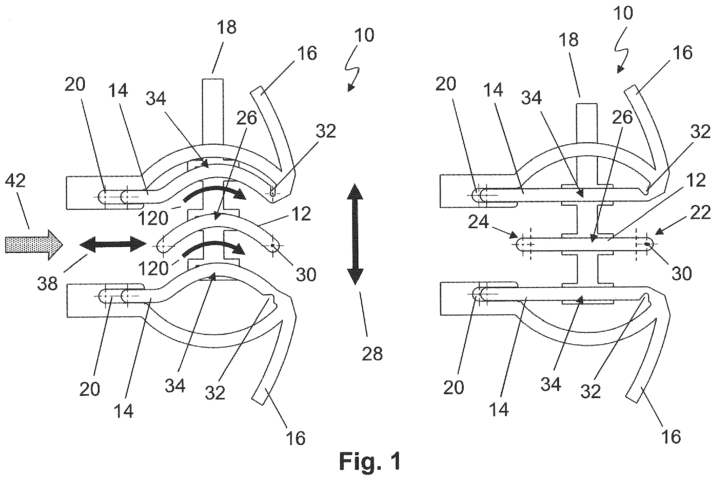

Fig. 1 zeigt eine schematische Ansicht eines Luftausströmers mit drei Luftleitelementen 12 und 14. Der auf der linken Seite dargestellte Luftausströmer 10 zeigt den Zustand von verformten Luftleitelementen 12 und 14 und der rechts dargestellte Luftausströmer 10 zeigt den Zustand von Luftleitelementen 12 und 14 im nicht verformten Zustand. In den Figuren werden Luftausströmer 10 gezeigt, welche flexible Gehäuseteile aufweisen. Die flexiblen Gehäuseteile bilden die Luftleitelemente 14 bzw. sind mit den Luftleitelementen 14 über Filmscharniere 32 verbunden. Die Luftleitelemente 14 können jedoch auch bei anderen Formen von Luftausströmern vorgesehen sein, wobei die Luftleitelemente 14 sowie das Luftleitelement 12 über ihren ersten Endabschnitt gelagert sind.

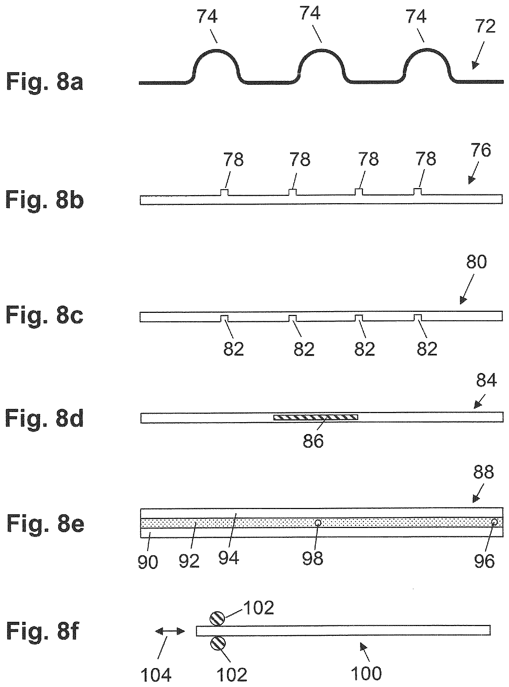

Die Luftleitelemente 14 sind über ein Filmscharnier 32 mit den Wänden 16 verbunden. Ferner sind die Wände 16 mit weiteren Gehäuse- oder Aufnahmeteilen verbunden, welche den Teil eines Luftzuführschachts oder des Gehäuses für den Luftausströmer 10 bilden. Jedoch können die Luftleitelemente 14 auch getrennt von den Gehäuseteilen des Luftzuführschachts angeordnet und ausgebildet sein. So sind die Luftleitelemente 14 in weiteren vorteilhaften Ausführungsformen beispielsweise über ein erstes Lagerelement 96 (siehe Fig. 8e) stationär in Bezug auf die Luftausströmer 10 angeordnet. Dies trifft insbesondere für die Fälle zu, in welchen die Luftleitelemente 14 aus einem anderen Material als die Wände 16 und die restlichen Komponenten des Luftausströmers 10 bzw. dessen Gehäuse ausgebildet sind. Regulär bestehen die Komponenten und Wände eines Luftausströmers 10 aus einem harten Kunststoff und die Luftleitelemente 14 sowie das Luftleitelement 12 bestehen aus einem flexiblen Material, welches wesentlich leichter zu verformen ist.

Das Luftleitelement 12 ist über ein erstes Lagerelement (in den Figuren nicht dargestellt) um einen Lagerpunkt 30 verschwenkbar in dem Luftausströmer 10 angeordnet. Ferner sind die Luftleitelemente 12 und 14 mit einer Verstelleinrichtung 18 verbunden. Die Verstelleinrichtung 18 ist so ausgebildet, dass diese eine Verformung der Luftleitelemente 12 und 14 in den Bereichen 26 und 34 bewirkt, wenn die Verstelleinrichtung 18 nach oben oder unten (wie durch Pfeil 28 angegeben) bewegt wird.

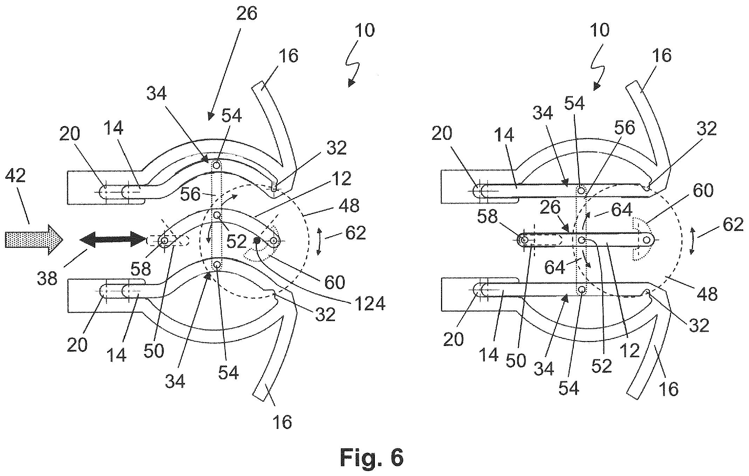

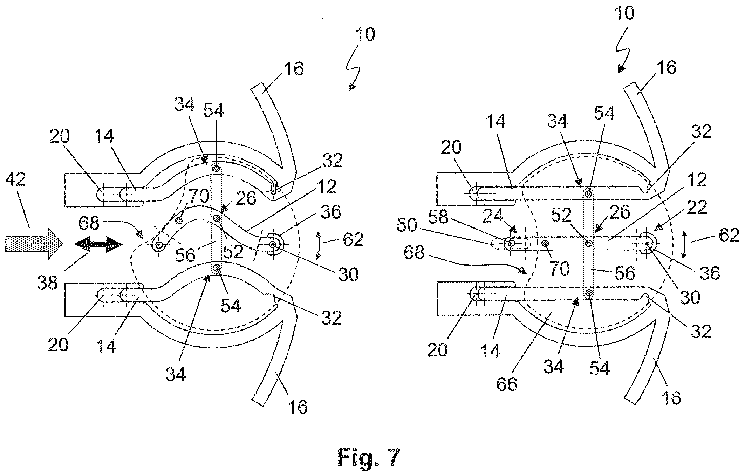

Das Luftleitelement 12 sowie die weiteren Luftleitelemente 14 weisen einen ersten Endabschnitt 22 und einen zweiten Endabschnitt 24 auf. Die Unterteilung des Luftleitelements 12 ist über die gestrichelten Linien dargestellt. Diese Aufteilung gilt im Wesentlichen genauso für die Luftleitelemente 14. Die Luftleitelemente 12 und 14 sind in dem ersten Endabschnitt 22 stationär und verschwenkbar angeordnet und in dem zweiten Endabschnitt 24 in Richtung des Pfeils 28 verschiebbar aufgenommen. Das Luftleitelement 12 ist hierbei über eine Aufnahme mit Führung (siehe beispielsweise Fig. 6 und 7) verschieblich gelagert. Die Luftleitelemente 14 sind in ihrem zweiten Endabschnitt in einer Aufnahme 20 verschiebbar gelagert. Die Aufnahmen 20 sowie die zweiten Endabschnitte der Luftleitelemente 14 (und ebenso des Luftleitelementes 12 in den entsprechenden Ausführungen) können zudem eine Beschichtung aufweisen, welche die Reibung an deren Oberfläche reduziert. Dadurch wird ein Verklemmen bzw. ein schwergängiges Verschieben der Luftleitelemente 12 und 14 in der Aufnahme 20 bzw. in den entsprechenden Aufnahmen für das Luftleitelement 12 reduziert/vermieden.

Die Luftleitelemente 12 und 14 bestehen aus einem flexiblen Material, das eine Verformung zulässt. Dadurch sind keine großen Kräfte über die Verstelleinrichtung 18 erforderlich, um die Luftleitelemente 12 und 14, wie in den Figuren gezeigt, zu verformen. Ferner sind die Luftleitelemente 12 und 14 so ausgebildet, dass sie nach Beendigung der Einwirkung einer Kraft über die Verstelleinrichtung 18 selbsttätig in ihre Ausgangsstellung zurückkehren (Ausgangsstellung ist in Fig. 1 auf der rechten Seite dargestellt) oder bei Bedarf in ihren Endpositionen selbstständig verbleiben. Die Verstelleinrichtung 18 ist ferner so ausgebildet, dass sie nach einem Verstellen bzw. einer Bewegung nach oben oder unten solange die Position und daher die Verformung der Luftleitelemente 12 und 14 beibehält, bis erneut eine Betätigung der Verstelleinrichtung 18 erfolgt, welche die Luftleitelemente 12 und 14 entweder anderweitig verformt oder eine Rückkehr in ihre Ausgangsstellung zulässt.

Die Luftleitelemente 12 und 14 können beispielsweise aus einem gummiartigen Material bestehen und weisen eine Erstreckung auf, wobei die Breite (in den Figuren dargestellt) geringer ist als deren Länge. Daher eignen sich die Luftleitelemente 12 und 14 insbesondere für sogenannte Breitbandausströmer. Jedoch können die Luftleitelemente 12 und 14 auch anderweitig ausgebildet sein und daher, anders als in den Figuren gezeigt, auch in vertikaler Richtung angeordnet sein. Weiter können Luftausströmer 10 sowohl die in den Figuren gezeigten horizontal ausgerichteten Luftleitelemente 12 und 14 und dahinter oder davor vertikal ausgerichtete Luftleitelemente aufweisen.

Erfolgt ein Verformen der Luftleitelemente 12 und 14 über die Verstelleinrichtung 18, so wird ein von einem Luftzuführschacht kommender Luftstrom (dargestellt durch die Durchströmungsrichtung 42) über die verformten Luftleitelemente 12 und 14 wie durch die Pfeile 120 angegeben, abgelenkt. Der aus dem Luftausströmer 10 austretende Luftstrom kann, wie durch Pfeil 28 angegeben, verschieden abgelenkt werden, wobei gegenüber herkömmlichen, aus dem Stand der Technik bekannten Luftausströmern größere Ablenkungen erreicht werden. Beispielsweise lassen sich mit einem in Fig. 1 dargestellten Luftausströmer 10 Ablenkungen von über 60 Grad gegenüber dem Ausgangszustand der Lamellen 12 und 14 erreichen. Entsprechend der Ausgestaltung des Luftausströmers 10 können aber auch Ablenkungen erreicht werden, welche gegenüber dem Ausgangszustand deutlich größer als 60 Grad sind.

Ausführungsform 2, die nicht unter dem Gegenstand der Erfindung steht:

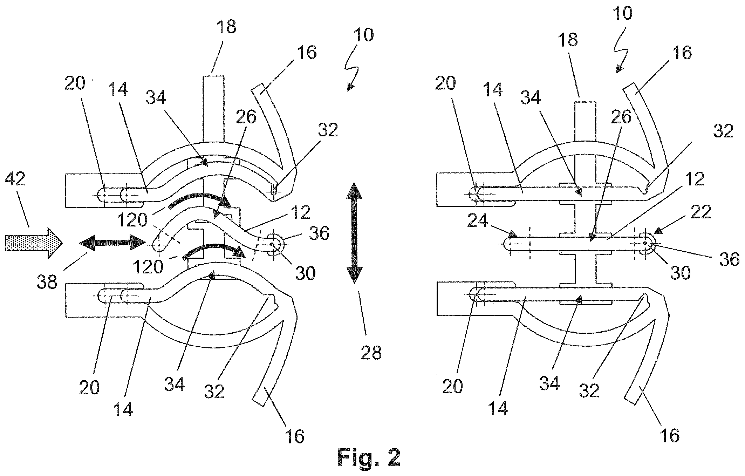

Fig. 2 zeigt eine alternative Ausführung eines Luftausströmers 10. Dabei ist auf der rechten Seite von Fig. 2 der Luftausströmer 10 in einem Zustand mit nicht verformten Luftleitelementen 12 und 14 dargestellt und auf der linken Seite ein Luftausströmer 10 mit verformten Luftleitelementen 12 und 14. Wie bereits mit Bezug auf Fig. 1 angegeben, können die Luftleitelemente 14 anders als über ein Filmscharnier 32 gelagert und mit einem Gehäuse des Luftausströmers 10 verbunden sein.

Im Wesentlichen entspricht die hier gezeigte Ausführung der in Fig. 1 gezeigten Ausführung eines Luftausströmers 10, wobei jedoch das Luftleitelement 12 im ersten Endabschnitt 22 an dessen äußerer Oberfläche ein Abschlusselement 36 aufweist. Ein solches Abschlusselement 36 kann beispielsweise eine Kunststoffleiste, mit oder ohne Chrombeschichtung, oder eine Beschichtung des ersten Endabschnitts 22 des Luftleitelements 12 sein. Bei der in Fig. 2 gezeigten Ausführung des Luftausströmers 10 ist das Abschlusselement 36 eine Kunststoffleiste, die mit dem ersten Endabschnitt 22 des Luftleitelements 12 verbunden ist. Die Kunststoffleiste (Abschlusselement 36) weist eine Chrombeschichtung auf. Daher weist der Luftausströmer 10 bzw. das mittlere Luftleitelement 12 in Blick auf den Luftausströmer 10 ein ansprechendes äußeres Erscheinungsbild auf. Derartige Applikationen können auch weitere Elemente aufweisen, wie z. B. Leuchtmittel (LED).

Ferner ist bei Fig. 2 das Luftleitelement 12 um den Lagerpunkt 30 fest mit einem Gehäuseteil des Luftausströmers 10 verbunden. Daher kann das Luftleitelement 12 nicht um den Lagerpunkt 30 verschwenkt werden und der erste Endabschnitt 22 ist fest in Bezug auf das Gehäuse des Luftausströmers 10 angeordnet. Ferner ist die Verstelleinrichtung 18 so ausgebildet, dass das Luftleitelement 12 im Bereich 26 nicht mittig verformt wird, sondern in Richtung des zweiten Endabschnitts 24. Dies ergibt sich auch durch die feste und nicht verschwenk- oder verdrehbare Anordnung des ersten Endabschnitts 22 des Luftleitelements 12. Dadurch ergibt sich im betätigten Zustand des Luftleitelementes 12 eine Verformung wie in Fig. 2 dargestellt. Eine derartige Verformung bewirkt neben der Ablenkung der durchströmenden Luft auch eine höhere Austrittsgeschwindigkeit der Luft. Dabei wird die Luft nicht vollständig über die gesamte Breite und Länge des Luftausströmers 10 beschleunigt, sondern nur in den Bereichen, welche den Querschnitt des zwischen den Luftleitelementen 12 und 14 gebildeten Kanälen gegenüber dem Querschnitt der Kanäle vor diesen Verengungen reduzieren. Beispielsweise ergibt sich eine Erhöhung der Austrittsgeschwindigkeit der Luft im Bereich zwischen dem Luftleitelement 12 und dem unteren Luftleitelement 14, da der Abschnitt des Luftdurchströmungskanals zwischen dem Luftleitelement 12 und dem Luftleitelement 14 im Bereich der maximalen Verformung des Luftleitelementes 12 größer ist als im Bereich zwischen dem Luftleitelement 14 und dem ersten Endabschnitt 22 des Luftleitelementes 12.

Die Luftleitelemente 12 und 14 bestehen wie die in Fig. 1 gezeigten Luftleitelemente 12 und 14 aus einem flexiblen Material. Daher kehren die Luftleitelemente 12 und 14 des Luftausströmers 10 nach Beendigung der Einwirkung der Kraftkomponente mittels der Verstelleinrichtung 18 und einer Verlagerung der Verstelleinrichtung 18 selbsttätig zurück in die Ausgangslage (siehe Darstellung in Fig. 2 auf der rechten Seite). Das Material der Luftleitelemente 12, 14 kann auch so weich gewählt werden, dass die Luftleitelemente 12, 14 in jeder beliebigen Position verbleiben können.

Ausführungsform 3, die nicht unter dem Gegenstand der Erfindung steht:

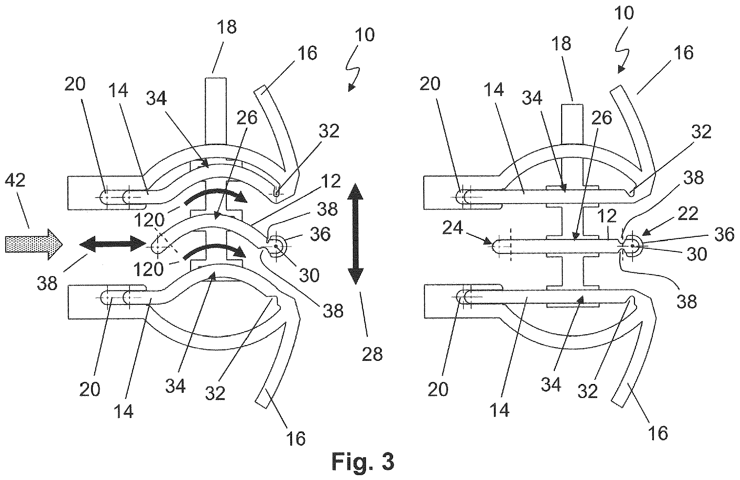

Fig. 3 zeigt eine weitere alternative Ausgestaltung eines Luftausströmers 10 mit Luftleitelementen 12 und 14, die flexibel ausgebildet sind und über eine Verstelleinrichtung 18 verformt werden können. Der Luftausströmer 10 in Fig. 3 entspricht im Wesentlichen den in den Fig. 1 und 2 gezeigten Luftausströmern 10, wobei das in der Mitte angeordnete Luftleitelement 12 Einschnitte 38 (Filmscharniere) und wie das Luftleitelement 12 aus Fig. 2 ein Abschlusselement 36 aufweist. Neben der Lage des Angriffspunktes, welche die Verformung des Luftleitelementes 12 im Bereich 26 maßgeblich beeinflusst (siehe hierzu auch Fig. 2), ermöglichen die Einschnitte 38 ein noch leichteres Verformen des Luftleitelementes 12 und unterstützen die Verformung des Luftleitelementes 12 gegenüber dem ersten Endabschnitt 22 des Luftleitelementes 12.

Wie bei Fig. 2 ist der erste Endabschnitt 22 des Luftleitelementes 12 stationär angeordnet und erfährt keine Verformung und kein Verschwenken um den Lagerpunkt 30 wie der erste Endabschnitt 22 von Fig. 1. Anders als bei dem in Fig. 2 gezeigten Ausführungsbeispiel eines Luftausströmers 10 wird bei dem Luftausströmer 10 in Fig. 3 die ausströmende Luft zwischen den Luftleitelementen 12 und 14 nicht wesentlich in ihrer Geschwindigkeit beeinflusst, da die Abstände zwischen dem Luftleitelement 12 und den Luftleitelementen 14 im Wesentlichen gleich bleiben. Jedoch erfolgt auch eine Veränderung der Geschwindigkeit der ausströmenden Luft zwischen dem unteren Luftleitelement 14 und dem Luftleitelement 12 im Bereich des ersten Endabschnitts 22 des Luftleitelements 12, wobei die Geschwindigkeit der ausströmenden Luft leicht erhöht wird. Ferner erfolgt im Bereich zwischen dem oberen Luftleitelement 14 und dem Luftleitelement 12 im zweiten Endabschnitt 24 eine Reduzierung der Geschwindigkeit der ausströmenden Luft, da der anschließende Bereich zwischen dem Luftleitelement 12 und dem Luftleitelement 14 größer ist als der Bereich zwischen dem oberen Luftleitelement 14 und dem zweiten Endabschnitt 24 des Luftleitelements 12.

Der Grad der Beschleunigung bzw. Reduzierung der Geschwindigkeit der ausströmenden Luft sowie die Ablenkung der den Luftausströmer 10 durchströmenden und ausströmenden Luft können in den verschiedenen Stellungen der Luftleitelemente 12 und 14 bzw. in deren Verformungen und der Verformung über die Verstelleinrichtung 18 gesteuert werden. In weiteren, in den Figuren nicht dargestellten Ausführungsformen kann ferner die Verstelleinrichtung 18 auch in Richtung des Pfeils 38 zumindest um einen geringen Betrag verlagert werden, so dass sich die Verformung in den Bereichen 26 und 34 der Luftleitelemente 12 und 14 verändert, was auch eine Veränderung der Ablenkung der ausströmenden Luft und auch eine Veränderung der Geschwindigkeit der ausströmenden Luft bewirkt.

Ausführungsform 4, die nicht unter dem Gegenstand der Erfindung steht:

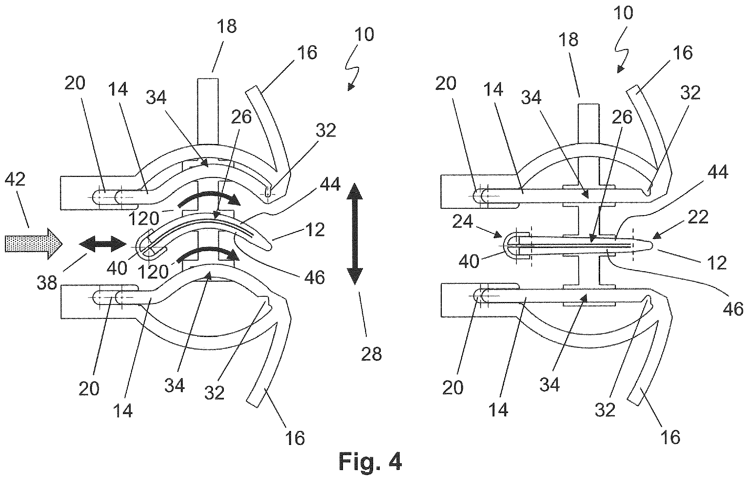

Fig. 4 zeigt eine weitere alternative Ausführungsform eines Luftausströmers 10, der im Wesentlichen den in den Figuren 1 bis 3 gezeigten Luftausströmern 10 entspricht. Bei dem in Fig. 4 dargestellten Luftausströmer 10 ist das mittlere Luftleitelement 12 so ausgebildet, dass es aus einer oberen Hälfte 44 und einer unteren Hälfte 46 besteht, wobei zwischen der oberen Hälfte 44 und der unteren Hälfte 46 entweder ein gasgefüllter Zwischenraum existiert oder das Luftleitelement 12 eine dazwischen liegende Schicht (bei Bedarf aufweisend Kohlefaser- und/ oder Glasfaserelemente) aufweist. Die obere Hälfte 44 und die untere Hälfte 46 sind im ersten Endabschnitt 22 des Luftleitelements 12 verbunden und weisen im zweiten Endabschnitt 24 ein Abschlusselement 40 auf. Das Abschlusselement 40 kann beispielsweise eine Kunststoffleiste sein, welche mit den Hälften 44 und 46 dauerhaft verbunden ist. Dadurch wird das zwischen den Hälften 44 und 46 eingeschlossene Gas zwischen den Hälften 44 und 46 gehalten. Der Raum zwischen den Hälften 44 und 46 kann auch gegenüber seiner Umgebung geöffnet sein, so dass keine Komprimierung eines eingeschlossenen Gases und damit eine Verformung entgegen einer gewünschten Richtung erfolgt. In weiteren Ausführungen kann jedoch gezielt ein Gas oder ein anderes Medium in den Raum zwischen den Hälften 44 und 46 eingebracht werden, um eine bestimmte Verformung zu erreichen. Die Hälften 44 und 46 bestehen aus einem flexiblen Material, welches nach Beendigung der Krafteinwirkung über die Verstelleinrichtung 18 selbsttätig in die Ausgangsstellung zurückkehrt oder so weich gewählt ist, dass die verformte Stellung beibehalten wird. Ferner ist das Luftleitelement 12 im zweiten Endabschnitt 24 beispielsweise über abstehende Lagerstifte an den Seiten des Abschlusselementes 40 in entsprechenden Führungen verschieblich gelagert. Dadurch wird die Bewegung des zweiten Endabschnitts 24 des Luftleitelementes 12 in vorgegebenen Bahnen sowie für die Endabschnitte der Luftleitelemente 14 in den Aufnahmen 20 bereitgestellt.

Die Ausgestaltung des mittleren Luftleitelementes 12 sorgt ferner dafür, dass die ausströmende Luft auf Grund der keilförmigen Ausgestaltung entlang des Luftleitelementes 12 zu dem ersten Endabschnitt 22 hingelenkt und in ihrer Austrittsgeschwindigkeit um ein geringes Maß reduziert wird. Dies trifft insbesondere für den auf der rechten Seite von Fig. 4 dargestellten unbetätigten Zustand der Verstelleinrichtung 18 und den unverformten Zustand der Luftleitelemente 12 und 14 des Luftausströmers 10 zu (Tragflächenprofil). Die Ausgestaltung zumindest des Luftleitelementes 12 könnte in weiteren nicht dargestellten Ausführungsformen auch so sein, dass sich das dickere Ende im ersten Endabschnitt 22 und das dünnere Ende im zweiten Endabschnitt 24 befindet.

Ausführungsform 5, die nicht unter dem Gegenstand der Erfindung steht:

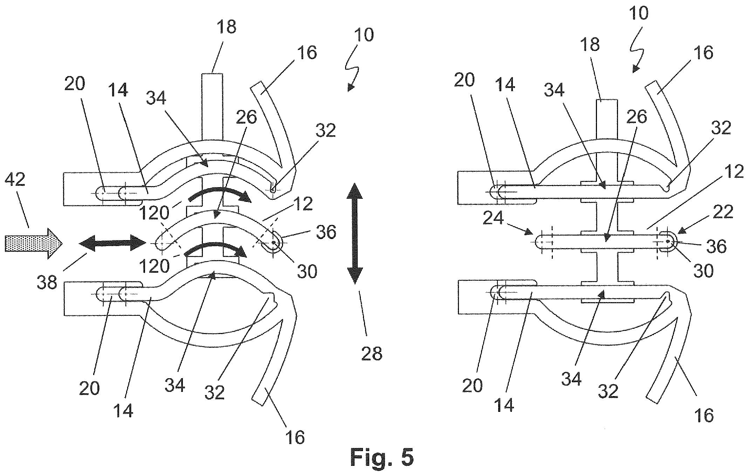

Fig. 5 zeigt eine weitere alternative Ausgestaltung eines Luftausströmers 10, wobei der in Fig. 5 dargestellte Luftausströmer 10 im Wesentlichen den in den Fig. 1 bis 4 gezeigten Luftausströmern 10 entspricht. Insbesondere entspricht der in Fig. 5 gezeigte Luftausströmer dem in Fig. 1 gezeigten Luftausströmer 10. Jedoch weist der in Fig. 5 dargestellte Luftausströmer 10 ein Abschlusselement 36 an dem mittleren Luftleitelement 12 auf. Im Gegensatz zu den in den Fig. 2 und 3 gezeigten Abschlusselementen 36 wird das Abschlusselement 36 von Fig. 5 beim Verformen des Luftleitelementes 12 mit um den Lagerpunkt 30 zusammen mit dem ersten Endabschnitt 22 verschwenkt.

Bei dem in Fig. 5 gezeigten Luftausströmer 10 erfolgt über eine Verlagerung der Verstelleinrichtung 18 eine Verformung der Luftleitelemente 12 und 14 in den Bereichen 26 und 34, wobei die den Luftausströmer 10 durchströmende Luft (Durchströmungsrichtung 42), wie durch die Pfeile 120 angegeben, abgelenkt wird und daher entsprechend aus dem vorderen Ende des Luftausströmers 10 austritt. Dadurch, dass der erste Endabschnitt 22 des Luftausströmers 12 um den Lagerpunkt 30 mitverschwenkt wird, erfolgt keine Beeinflussung der Ausströmung der Luft in dem ersten Endabschnitt 22, wie dies beispielsweise bei den in den Fig. 2 und 3 gezeigten Luftausströmern erfolgt, da in diesen Ausführungen der erste Endabschnitt 22 des Luftleitelementes 12 nicht verschwenkt werden kann.

Die Größe des Abschlusselements 36 ist frei wählbar. Bei den in den Fig. 2 und 3 gezeigten Luftausströmern 10 ist das Abschlusselement 36 auf das Luftleitelement 12 aufgesetzt. Es kann aber auch bündig mit der Oberfläche des Luftleitelementes 12 abschließen oder als filigrane Linie im vordersten Bereich der Stirnkante des Luftleitelements 12 liegen.

Die Luftablenkung der in den Fig. 1 bis 7 und 9 gezeigten Ausführungen von Luftausströmern 10 variiert nach Maßgabe der Ausgestaltung des Luftleitelementes 12 sowie der Ausgestaltung der Verbindung des ersten Endabschnittes 22 mit einem nicht dargestellten Gehäuse des Luftausströmers 10. So kann ein über einen Lagerpunkt 30 verschwenkbarer Endabschnitt 22 des Luftleitelementes 12 in bestimmten Ausführungsformen eine bessere Luftablenkung bereitstellen, wobei jedoch in den anderen Ausführungsformen dies aus bestimmten Gründen nicht erwünscht ist. Ebenso stellen die in den Fig. 1 bis 7 und 9 dargestellten Luftausströmer 10 verschiedene Druckverläufe zwischen einem Luftzuführschacht und dem offenen Ende der Luftausströmer 10 bereit. Wie bereits angegeben, erfolgt durch die unterschiedliche Ausgestaltung der Kanalhöhe der durchströmenden Luft eine Erhöhung oder Reduzierung der Durchströmungsgeschwindigkeit der ausströmenden Luft, was ebenso in Druckverlusten bzw. Druckanstiegen resultiert. Auch sind diese Druckverluste bzw. Druckanstiege in Abhängigkeit der gewünschten Ausführung und Ausgestaltung zu wählen und einzuplanen. Beispielsweise entsteht bei dem in Fig. 2 gezeigten Luftausströmer 10 im verformten Zustand der Luftleitelemente 12 und 14 eine zusätzliche Verwirbelung der ausströmenden Luft. Die in Fig. 4 gezeigte Ausführung eines Luftausströmers 10 weist gegenüber den anderen in den Figuren gezeigten Luftausströmern 10 beispielsweise einen höheren Druckverlust am offenen Ende des Luftausströmers 10 auf.

Einen geringen Druckverlust weisen beispielsweise die in den Figuren 1 und 5 gezeigten Ausführungen eines Luftausströmers 10 auf.

Ausführungsform 6, die nicht unter dem Gegenstand der Erfindung steht:
Fig. 6 zeigt eine weitere alternative Ausführung eines Luftausströmers 10. Die in Fig. 6 gezeigte Ausführung eines Luftausströmers 10 unterscheidet sich von den in den Fig. 1 bis 5 gezeigten Ausführungen von Luftausströmern 10 vor allem durch die Einbringung der Kraft zum Verformen der Luftleitelemente 12 und 14. Bei Fig. 6 ist ein Verstellmittel 48 vorgesehen, welches um einen Drehpunkt 124 in Richtung des Pfeils 62 verdreht werden kann. Das Verstellmittel 48 ist mit einem Bestätigungselement 52 verbunden, welches sich im Bereich 26 des Luftleitelementes 12 durch das Luftleitelement 12 hindurch erstreckt. Dadurch erfolgt bei einem Verdrehen des Verstellmittels 48 in Richtung des Pfeils 62 eine Verformung des Luftleitelementes 12 in Richtung der Pfeile 64. Die Luftleitelemente 14 weisen ebenso in den Bereichen 34 Betätigungselemente 54 auf, die sich in den Luftleitelementen 14 durch diese hindurch erstrecken und mit einer Koppelstange 56 verbunden sind. Die Koppelstange 56 ist ferner mit dem Betätigungselement 52 verbunden, so dass bei einer Verformung des Luftleitelementes 12 über ein Verdrehen des Verstellmittels 48 und eine Bewegung des Betätigungselementes 52 ebenso eine Betätigung bzw. Bewegung der Betätigungselemente 54 ergibt, was zu einer Verformung der Luftleitelemente 14 in den Bereichen 34 führt.

Das Luftleitelement 12 weist im zweiten Endabschnitt 24 (in Fig. 6 nicht angegeben, jedoch entspricht Ausgestaltung des Luftleitelementes 12 im Wesentlichen den in den Fig. 1 bis 5 gezeigten Luftleitelementen 12) eine sich durch das Luftleitelement 12 erstreckende Führungsstange 58 auf. Die Führungsstange 58 übersteht wie die Betätigungselemente 52 und 54 das Luftleitelement 12 bzw. die Luftleitelemente 14 mindestens auf einer Seite und ist in einer Führung 50 gelagert. Bei einer Verformung des Luftleitelementes 12 wird daher der zweite Endabschnitt des Luftleitelementes 12 über die Führungsstange 58 in einer entsprechenden Bahn verschoben. Die Führung 50 erfüllt daher die gleiche Aufgabe wie die Aufnahmen 20 für die Endabschnitte der Luftleitelemente 14.

Bei einem Luftausströmer 10 können auch zwei Verstellmittel 48 vorgesehen sein, wobei diese jeweils mit den aus den Luftleitelementen 12 und 14 hervorstehenden Lagerabschnitten verbunden sind. Beide Verstellmittel 48 sind um den Drehpunkt 124 verdrehbar. Eines der Verstellmittel 48 kann hierbei mit dem anderen Verstellmittel 48 über eine Koppeleinrichtung derart verbunden sein, dass nur eines der Verstellmittel 48 von einer Bedienperson betätigt werden kann, jedoch beide Verstellmittel 48 um ein gleiches Maß verdreht werden. Eine Koppeleinrichtung kann bspw. eine Welle mit Zahnrädern an den Enden der Welle sein, wobei die Zahnräder mit korrespondierenden Zahnrädern oder Zahnradabschnitten an den Verstellmitteln 48 verbunden sind. Ein Verdrehen des oder der Verstellmittel 48 kann auch motorisch erfolgen.

Das Luftleitelement 12 ist im ersten Endabschnitt 22 um ein erstes Lagerelement (in Fig. 6 nicht bezeichnet) verschwenkbar stationär gelagert, wobei das erste Lagerelement fest mit dem Gehäuse des Luftausströmers 10 verbunden ist. Das Verstellmittel 48 weist eine Ausnehmung 60 auf. Die Ausnehmung 60 dient dazu, dass das erste Lagerelement beim Verdrehen des Verstellmittels 48 um den Drehpunkt 124 nicht mit dem Verstellmittel 48 zusammenstößt und das Verstellen der Luftleitelemente 12 und 14 behindert. Die Erstreckung um den Drehpunkt 124 der Ausnehmung 60 gibt daher auch vor, inwieweit das Verstellmittel 48 verdreht werden kann. In weiteren nicht dargestellten Ausführungsformen kann das Betätigungselement 52 entlang des Verstellmittels 48 derart verlagert werden, dass der Abstand des Betätigungselementes 52 zu dem Drehpunkt 124 veränderbar ist.

Das Verstellmittel 48 kann relativ schwergängig um den Drehpunkt 124 verdrehbar angeordnet sein, so dass zum Verdrehen des Verstellmittels 48 eine gewisse Kraft erforderlich ist, um die Verformung der Luftleitelemente 12 und 14 zu erreichen. Die Schwergängigkeit stellt jedoch sicher, dass nach dem Verstellen des Verstellmittels 48 dieses nicht unbeabsichtigt auf Grund der Widerstandskraft der Luftleitelemente 12 und 14 gegen eine Verformung zurück in die Ausgangsstellung (siehe Luftausströmer 10 auf der rechten Seite in Fig. 6) verbracht wird. Das Verstellmittel 48 kann jedoch auch über weitere Einrichtungen in dieser Position gehalten werden, in welcher die Luftleitelemente 12 und 14 verformt sind, so dass eine Verbringung in die Ausgangsstellung für die Luftleitelemente 12 und 14 nur dann erfolgt, wenn dies gewünscht wird und das Verstellmittel 48 entsprechend betätigt wird. Das Verstellmittel 48 bewirkt dabei nicht die Rückkehr der Luftleitelemente 12 und 14 in ihre Ausgangstellung, sondern gibt die Rückkehr frei.

Das Verstellmittel 48 kann beispielsweise auch mit einem elektrischen Antrieb gekoppelt sein, der eine Verdrehung bzw. Bewegung des Verstellmittels 48 bewirkt. Nach einem Verformen der Luftleitelemente 12 und 14 verbleibt das Verstellmittel 48 in der gewünschten Position und wird über den elektrischen Antrieb wieder zurück in die Ausgangsstellung oder in eine andere Stellung verbracht, wenn ein entsprechendes Ansteuersignal vorliegt.

Die Betätigungselemente 52 und 54 können stabförmige Elemente sein, die eine hohe Steifigkeit aufweisen und mit den Luftleitelementen 12 und 14 dauerhaft verbunden sind. In weiteren Ausführungsformen ist es vorgesehen, dass die Betätigungselemente 52 und 54 jeweils zweifach vorgesehen sind, so dass an der Koppelstange 56 und dem Verstellmittel 48 jeweils zwei Betätigungselemente 52 und 54 für jeweils das entsprechende Luftleitelement 12 und 14 vorgesehen sind. Diese umgreifen daher die Luftleitelemente 12 und 14, so dass die Luftleitelemente 12 und 14 nicht direkt mit den Betätigungselementen 52 und 54 verbunden sein müssen. Die Koppelstange 56 kann außerhalb des Strömungskanals positioniert sein, um keinen Luftwiderstand zu bieten.

### Ausführungsbeispiel 1 der Erfindung:

Fig. 7 zeigt eine weitere alternative Ausführungsform eines Luftausströmers 10, wobei der in Fig. 7 dargestellte Luftausströmer 10 zum Verformen der Luftleitelemente 12 und 14 ein Verstellmittel 66 aufweist.

Im Gegensatz zu dem in Fig. 6 gezeigten Luftausströmer 10 und dem beschriebenen Verstellmittel 48 ist das Verstellmittel 66 um einen Drehpunkt drehbar, welcher sich im Bereich des Betätigungselementes 52 im nicht verformten Zustand des Luftleitelementes 12 (siehe Fig. 7 rechte Abbildung) befindet. Das Luftleitelement 12 weist ein Abschlusselement 36 auf, das im ersten Endabschnitt 22 des Luftleitelementes 12 mit diesem verbunden ist. Der erste Endabschnitt 22 des Luftleitelementes 12 ist im Lagerpunkt 30 fest mit einem Gehäuse und einem ersten Lagerelement (in Fig. 7 nicht dargestellt) verbunden, so dass der erste Endabschnitt 22 und das Abschlusselement 36 im verformten Zustand des Luftleitelementes 12 keine Änderung der Ausrichtung erfahren.

Das Verstellmittel 66 weist eine Ausbuchtung 68 auf, welche dazu dient, ein Verschieben der Führungsstange 58 im zweiten Endabschnitt 24 des Luftleitelementes 12 in den verschiedenen Stellungen zu ermöglichen, ohne dass die Führungsstange 58 an das Verstellmittel 66 stößt. Die Führungsstange 58 ist ferner in der Führung 50 entsprechend der Verformung des Luftleitelementes 12 auf Grund der ortsfesten Lagerung des ersten Endabschnitts 22 bewegbar. Ebenso sind die zweiten Endabschnitte der Luftleitelemente 14 in den Aufnahmen 20 auf Grund der Verformung der Luftleitelemente 14 bewegbar.

Die Luftleitelemente 14 sind über sich in den Luftleitelementen 14 erstreckende Betätigungselemente 54, die an ihren äußeren Enden die Luftleitelemente 14 auf mindestens einer Seite überragen, mit einer Koppelstange 56 und über die Koppelstange 56 mit einem aus dem Luftleitelement 12 vorstehenden Lagerabschnitt eines Betätigungselementes 52 verbunden. Das Betätigungselement 52 ist in dem Luftleitelement 12 aufgenommen.

Ferner weist das Luftleitelement 12 ein Betätigungselement 70 auf, das beabstandet zu dem Betätigungselement 52 in dem Luftleitelement 12 verläuft. Die Betätigungselemente 52 und 70 sind so mit dem Verstellmittel 66 verbunden, dass bei einem Drehen des Verstellmittels 66 in Richtung des Pfeils 62 für das Luftleitelement 12 eine Verformung, wie in Fig. 7 auf der linken Seite dargestellt, erfolgt.

Die Betätigungselemente 70 und 52 können beispielsweise verdrehfest mit dem Verstellmittel 66 verbunden sein, wobei die Betätigungselemente 70 und 52 dann entweder fest in dem Luftleitelement 12 angeordnet oder in Aufnahmen in dem Luftleitelement 12 verdrehbar aufgenommen sind. Ferner können auch die Betätigungselemente 70 und 52 fest mit dem Luftleitelement 12 verbunden sein und verdrehbar mit dem Verstellmittel 66 derart verbunden sein, dass diese bei einer Bewegung in Richtung des Pfeils 62 ebenfalls bewegt werden, aber um ihre Längsachse verdrehbar mit dem Verstellmittel 66 verbunden sind.

Die Ausbuchtung 68 in Fig. 7 auf der linken Seite ist ferner so ausgebildet, dass die Führungsstange 58 nicht mit dem Verstellmittel 66 zusammenstößt. Daher ist die in Fig. 7 gewählte Darstellung funktionstechnisch nicht fehlerfrei, zeigt jedoch die prinzipielle Ausgestaltung der Komponenten. So kann die Ausbuchtung 68 größer ausgebildet sein oder weitere Einschnitte aufweisen, welche entsprechend der in Fig. 6 gezeigten Ausnehmung 60 in dem Verstellmittel 66 vorgesehen sind, um eine Bewegung des Verstellmittels 66 ohne Kollision mit der Führungsstange 58 zu ermöglichen. Ferner ist eine entsprechend der in Fig. 6 gezeigten Ausnehmung 60 korrespondierende Ausnehmung bei dem Verstellmittel 66 vorgesehen, welche ein Verdrehen des Verstellmittels 66 ermöglicht, ohne dass ein erstes Lagerelement, welches durch den ersten Endabschnitt 22 des Luftleitelementes 12 durch den Lagerpunkt 30 verläuft, mit dem Verstellmittel 66 zusammenstößt oder die Bewegung des Verstellmittels 66 verhindert oder einschränkt.

Das Luftleitelement 12 ist in Fig. 7 über zwei Betätigungselemente 70 und 52 mit dem Verstellmittel 66 verbunden. Daher ergibt sich eine spezielle Verformung bzw. Krümmung des Luftleitelementes 12 beim Verdrehen des Verstellmittels 66. In weiteren Ausgestaltungen können mehrere Betätigungselemente vorgesehen sein, so dass das Luftleitelement 12 verschiedene Auslenkungen erfahren kann. Bei dem in Fig. 7 gezeigten Luftausströmer 10 ergeben sich weiter Druckunterschiede, welche zu veränderten Austrittsgeschwindigkeiten der ausströmenden Luft führen.

Fig. 8a zeigt in schematischer Ansicht ein Betätigungselement 72, welches eine Vielzahl von Bögen 74 aufweist. Ein solches Betätigungselement 72 kann in einem flexiblen Luftleitelement angeordnet sein, wobei in einem nicht verformten und unbetätigten Zustand des Luftleitelements die Bögen 74 im Wesentlichen in der Ebene bzw. Fläche des Luftleitelementes verlaufen.

Die äußeren Lagerabschnitte des Betätigungselementes 72 ragen seitlich aus einem entsprechenden Luftleitelement hervor und sind so mit einem Verstellmittel verbunden, so dass das Betätigungselement 72 im Wesentlichen eine Verformung des Luftleitelementes hervorruft, die im Wesentlichen der Form der Bögen 74 entspricht. Dadurch, dass das Luftleitelement an einem Endabschnitt fest/stationär gelagert ist und das Luftleitelement aus einem sehr flexiblen Material besteht, können derartige Verformungen erreicht werden, wobei das Material des Luftleitelements im Bereich der Bögen 74 dann stärker gedehnt wird als in den Bereichen dazwischen.

Fig. 8b zeigt ein Luftleitelement 76 mit Rippen 78. Diese Rippen 78 können beispielsweise auf der Oberseite, wie in Fig. 8b gezeigt, oder auf der Unterseite eines Luftleitelementes 76 angeordnet sein. Diese Rippen 78 können sich ferner sowohl in Längsrichtung über das Luftleitelement 76 erstrecken oder in der Breite, d. h. parallel zu beispielsweise einem Betätigungselement (siehe Fig. 6, 7). Diese Rippen 78 können Angriffsflächen für Betätigungselemente bilden, wobei die Betätigungselemente auch zwischen zwei Rippen 78 gelagert werden können, wenn der Abstand entsprechend ausgebildet ist.

Ferner bewirken die Rippen 78 eine bestimmte Verformung eines Luftleitelementes, da das Luftleitelement 76 in diesem Bereich der Rippen 78 stärker ausgebildet ist und eine höhere Widerstandskraft gegen eine Verformung aufweist (gezielte Aufdickung zur Verstärkung).

Daher kann beispielsweise eine Rippe 78 auch im Bereich eines gewünschten Scheitels beim Verformen eines Luftleitelementes 76 vorgesehen sein.

Fig. 8c zeigt ein weiteres Luftleitelement 80, welches eine Vielzahl von Fugen 82 aufweist. Die Fugen 82 können beispielsweise zur Aufnahme bzw. Anlage von Betätigungselementen dienen. Ferner können die Fugen 82 die Bereiche des Luftleitelementes 80 bilden, in welchen eine Verformung zuerst auftritt, da das Luftleitelement 80 im Bereich der Fugen 82 eine geringere Widerstandskraft gegen eine Verformung aufweist (gezielte Materialschwächung).

Fig. 8d zeigt ein Luftleitelement 84, welches ein Versteifungselement 86 aufweist. Das Versteifungselement 86 ist in dem Luftleitelement 84 aufgenommen bzw. von diesem umschlossen. Das Versteifungselement 86 kann ebenso flexibel ausgebildet sein und eine Verformung ausführen, jedoch tritt im Bereich des Luftleitelementes 84 mit dem Versteifungselement 86 eine Verformung nur schwerer bzw. später ein als im restlichen Bereich des Luftleitelementes 84. Derartige Versteifungselemente 86 können auch durch eine Vielzahl von Glasfaser- und/oder Kohlefaserelementen gebildet werden, welche in dem Material des Luftleitelements 84 aufgenommen sind.

Auch können andere Einlegeteile für Versteifungselemente verwendet werden. Ferner ist die Form des Versteifungselementes 86 nicht auf die in Fig. 8d beschränkte Ausführung beschränkt. Das Versteifungselement 86 könnte sich auch über die gesamte Breite bzw. Länge des Luftleitelementes 84 erstrecken oder nur in bestimmten Bereichen. So ist auch die Einbringung eines Versteifungselementes 86 im ersten Endabschnitt eines Luftleitelementes für bestimmte Ausführungen vorgesehen.

Fig. 8e zeigt ein weiteres Luftleitelement 88, welches aus einer Vielzahl von Schichten besteht. Das Luftleitelement 88 weist eine erste Schicht 90, eine zweite Schicht 92 und eine dritte Schicht 94 auf. Die erste Schicht 90 und die dritte Schicht 94 bestehen aus einem gummiartigen Material und die dazwischen befindliche zweite Schicht 92 weist harte Elemente (z.B. Kohlefaserverstärkungselemente) auf. Die zweite Schicht 92 ist jedoch ebenso ausgebildet, dass diese eine Verformung bei Einwirken einer Kraftkomponente durchführt. In der zweiten Schicht 92 ist ferner ein erstes Lagerelement 96 aufgenommen, welches sich im ersten Endabschnitt des Luftleitelementes 88 befindet. In einem mittleren Bereich, welcher verformt wird bzw. über welchen die Verformung in das Luftleitelement 88 eingebracht wird, weist die zweite Schicht 92 des Luftleitelements 88 ein Betätigungselement 98 auf.

Ferner können die erste Schicht 90 und die dritte Schicht 94 mit einer weiteren Beschichtung versehen sein (beispielsweise zur Reduzierung der Reibung) oder selber eine aufgebrachte Beschichtung sein.

Fig. 8f zeigt die Aufnahme eines Luftleitelementes 100 zwischen zwei Walzen 102. Die Walzen 102 dienen zum Ausgleichen der Bewegung des Luftleitelements 100 im zweiten Endabschnitt bei einem Verformen, da das Luftleitelement 100 im ersten Endabschnitt fest bzw. stationär gelagert ist. Die Walzen 102 erfüllen daher die gleiche Aufgabe wie die Lagerung der zweiten Endabschnitte der Luftleitelemente 14 in den Aufnahmen 20. Die Walzen 102 sind drehbar um Lagerstifte in einem Gehäuse eines Luftausströmers angeordnet und erlauben eine reibungsreduzierte Bewegung des Luftleitelementes 100 im zweiten Endabschnitt in Richtung des Pfeils 104. Dazu weisen die Walzen 102 eine Beschichtung auf oder sind so ausgebildet, dass die Reibung zwischen den Walzen 102 und dem Luftleitelement 100, zumindest im Bereich des zweiten Endabschnittes, reduziert ist.

### Ausführungsbeispiel 2 der Erfindung:

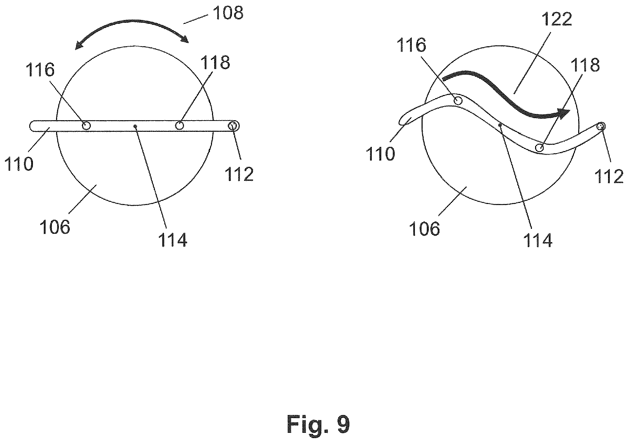

Fig. 9 zeigt in schematischer Ansicht eine weitere alternative Ausgestaltung für Luftausströmer, wobei nur ein Luftleitelement 110 dargestellt ist. Das Luftleitelement 110 kann mit weiteren Luftleitelementen gekoppelt sein oder ein Luftausströmer weist nur das in Fig. 9 gezeigte Luftleitelement 110 auf. Das Luftleitelement 110 ist mit einem Verstellmittel 106 verbunden, welches um einen Drehpunkt 114 in Richtung des Pfeils 108 verdreht werden kann. Ferner ist das Verstellmittel 106 mit dem Luftleitelement 110 ebenfalls über zwei Betätigungselemente 116 und 118 und zwar derart verbunden, dass bei einer Bewegung des Verstellmittels 106 in Richtung des Pfeils 122 sich Bereiche des Luftleitelements 10 voneinander wegbewegen. Einen solchen Zustand zeigt die rechte Seite von Fig. 9.

Der zweite Endabschnitt ist verschiebbar entweder in einer Aufnahme 20 oder beispielsweise über Walzen 102 gelagert und der erste Endabschnitt ist über ein erstes Lagerelement 112 stationär mit dem Gehäuse des Luftausströmers verbunden. Daher erfolgt beim Verdrehen des Verstellmittels 106 eine Verformung des Luftleitelements 110, wie auf der rechten Seite in Fig. 9 dargestellt. Die Verformung kann so weit gehen, dass in einem Zustand, bei welchem sich die Betätigungselemente 116 und 118 in ihrer maximalen Auslenkung befinden, d.h. Betätigungselement 116 an oberster Position und Betätigungselement 118 in der niedrigsten Position, ein Luftstrom aus dem Luftzuführschacht des Luftausströmers vollständig unterbunden wird.

Dazu ist das Luftleitelement 110 aus einem flexiblen Material hergestellt, welches eine entsprechende Verformung ermöglicht.

In weiteren, nicht dargestellten Ausführungen weisen Luftausströmer kein mittleres Luftleitelement (wie das Luftleitelement 12) auf, sondern nur ein oberes und eine unteres Luftleitelement (wie die Luftleitelemente 14). Weiter können Luftausströmer mehrere mittlere Luftleitelemente (wie das Luftleitelement 12) aufweisen.

**Bezugszeichenliste**

| | | | |
|---|---|---|---|
| 10 | Luftausströmer | 68 | Ausbuchtung |
| 12 | Luftleitelement | 70 | Betätigungselement |
| 14 | Luftleitelement | 72 | Betätigungselement |
| 16 | Wand | 74 | Bogen |
| 18 | Verstelleinrichtung | 76 | Luftleitelement |
| 20 | Aufnahme | 78 | Rippe |
| 22 | erster Endabschnitt | 80 | Luftleitelement |
| 24 | zweiter Endabschnitt | 82 | Fuge |
| 26 | Bereich | 84 | Luftleitelement |
| 28 | Pfeil | 86 | Versteifungselement |
| 30 | Lagerpunkt | 88 | Luftleitelement |
| 32 | Filmscharnier | 90 | erste Schicht |
| 34 | Bereich | 92 | zweite Schicht |
| 36 | Abschlusselement | 94 | dritte Schicht |
| 38 | Einschnitt | 96 | erstes Lagerelement |
| 40 | Abschlusselement | 98 | Betätigungselement |
| 42 | Durchströmungsrichtung | 100 | Luftleitelement |
| 44 | Hälfte | 102 | Walze |
| 46 | Hälfte | 104 | Pfeil |
| 48 | Verstellmittel | 106 | Verstellmittel |
| 50 | Führung | 108 | Pfeil |
| 52 | Betätigungselement | 110 | Luftleitelement |
| 54 | Betätigungselement | 112 | erstes Lagerelement |
| 56 | Koppelstange | 114 | Drehpunkt |
| 58 | Führungsstange | 116 | Betätigungselement |
| 60 | Ausnehmung | 118 | Betätigungselement |
| 62 | Pfeil | 120 | Pfeil |
| 64 | Pfeil | 122 | Pfeil |
| 66 | Verstellmittel | 124 | Drehpunkt |

## Patentansprüche

1. Luftleitelement (12, 110) aus einem flexiblen Material, wobei das Luftleitelement (12, 110) einen in einem Gehäuse gelagerten ersten Endabschnitt (22) aufweist, und wobei mindestens der dem ersten Endabschnitt (22) gegenüberliegende zweite Endabschnitt (24) derart im Gehäuse abgestützt ist, dass durch Krafteinwirkung mindestens einer Kraftkomponente auf einen Bereich (26; 34) des Luftleitelements (12, 110) sich das Luftleitelement (12, 110) mindestens in diesem Bereich (26; 34) verformt und das Luftleitelement (12, 110) nach Beendigung der Krafteinwirkung selbsttätig in seine Ausgangsstellung zurückkehrt, **dadurch gekennzeichnet, dass** der besagte Bereich (26; 34) zwischen dem ersten Endabschnitt (22) und dem zweiten Endabschnitt (24) angeordnet ist, und dass ferner zwischen dem ersten und dem zweiten Endabschnitt (22, 24) mindestens zwei Betätigungselemente (52, 70; 116, 118) beabstandet voneinander an oder in dem Luftleitelement (12, 110) angeordnet sind und Lagerabschnitte der Betätigungselemente (52, 70; 116, 118) aus dem Luftleitelement (110) hervorstehen und mit mindestens einem Verstellmittel (66; 106) oder einer Verstelleinrichtung verbunden sind.

2. Luftleitelement nach dem vorhergehenden Anspruch, wobei der zweite Endabschnitt (24) in einer Aufnahme (20) verschiebbar gelagert ist.

3. Luftleitelement nach einem der vorhergehenden Ansprüche, wobei der erste Endabschnitt (22) mittels eines ersten Lagerelementes (96) und das erste Lagerelement (96) in mindestens einer Aufnahme verschwenkbar oder drehbar in dem ersten Endabschnitt (22) gelagert sind.

4. Luftleitelement nach einem der vorhergehenden Ansprüche, wobei das Betätigungselement (52; 70) Lagerabschnitte aufweist, wobei mindestens die Lagerabschnitte im Wesentlichen parallel zu dem ersten Endabschnitt (22) verlaufen.

5. Luftleitelement nach einem der vorhergehenden Ansprüche, wobei das mindestens eine Verstellmittel ein um eine parallel zu dem ersten Endabschnitt (22) verlaufende Drehachse drehbares Verstellmittel (66; 106) ist, wobei zwei Lagerabschnitte von den mindestens zwei Betätigungselementen (52, 70; 116, 118) beabstandet zueinander mit dem Verstellmittel (66; 106) verbunden sind und mindestens ein Lagerabschnitt beabstandet zu der Drehachse an dem drehbaren Verstellmittel (66; 106) angeordnet ist.

6. Luftleitelement nach einem der vorhergehenden Ansprüche, wobei das Luftleitelement (12)an dem ersten Endabschnitt (22) und/oder dem zweiten Endabschnitt (24) ein Abschlusselement (36) aufweist.

7. Luftleitelement nach Anspruch 6, wobei das erste Lagerelement (96) in dem Abschlusselement (36) aufgenommen ist.

8. Luftleitelement nach einem der vorhergehenden Ansprüche, wobei der zweite Endabschnitt (24) über mindestens ein drehbares zweites Lagerelement abgestützt ist oder der zweite Endabschnitt (24) zwischen zwei drehbar gelagerten zweiten Lagerelementen abgestützt ist.

9. Luftleitelement nach Anspruch 8, wobei das mindestens eine zweite Lagerelement eine Rolle oder eine Walze (102) ist.

10. Luftleitelement nach einem der vorhergehenden Ansprüche, wobei mindestens ein Betätigungselement (72) einen nicht linearen Verlauf aufweist, der sich im Zustand des Luftleitelements ohne Krafteinwirkung im Wesentlichen in dem Luftleitelement oder in einer Ebene parallel zu dem Luftleitelement erstreckt.

11. Luftleitelement nach einem der vorhergehenden Ansprüche, wobei das Luftleitelement (12) mit mindestens einem weiteren Luftleitelement (14) über eine Koppeleinrichtung, ein Verstellmittel oder eine Verstelleinrichtung verbunden ist.

12. Luftleitelement nach einem der vorhergehenden Ansprüche, wobei das Luftleitelement (12; 110) ein Luftleitelement (12; 11) eines Luftausströmers (10) eines Kraftfahrzeuges ist.

13. Luftausströmer (10) für ein Kraftfahrzeug, aufweisend mindestens ein Luftleitelement nach einem der vorhergehenden Ansprüche.

## Claims

1. An air-guiding element (12, 110) made of a flexible material, wherein the air-guiding element (12, 110) has a first end section (22) supported in a housing, and wherein at least the second end section (24) opposite from the first end section (22) is supported in the housing in such a manner that the air-guiding element (12, 110) deforms by application of a force of at least one force component on a region (26; 34) of the air-guiding element (12, 110) at least in said region (26; 34), and the air-guiding element (12, 110) returns automatically to its starting position after the application of force ends, **characterised in that** said region (26; 34) is arranged between the first end section (22) and the second end section (24), and **in that** at least two actuating elements (52, 70; 116, 118) are furthermore arranged between the first and the second end section (22, 24) spaced apart from one another on or in the air-guiding element (12, 110) and support sections of the actuating elements (52, 70; 116, 118) protrude from the air-guiding element (110) and are connected with at least one adjustment means (66; 106) or an adjustment device.

2. The air-guiding element according to the preceding claim, wherein the second end section (24) is mounted in a seat (20) in a moveable manner.

3. The air-guiding element according to one of the preceding claims, wherein the first end section (22) is mounted by means of a first support element (96) and the first support element (96) in at least one seat in the first end section (22) in a rotatable or swiveable manner.

4. The air-guiding element according to one of the preceding claims, wherein the actuating element (52; 70) has support sections, wherein at least the support sections run essentially parallel to the first end section (22).

5. The air-guiding element according to one of the preceding claims, wherein the at least one adjustment means is an adjustment means (66; 106) rotatable about an axis of rotation running parallel to the first end section (22), wherein two support sections are connected with the adjustment means (66; 106) spaced apart from the at least two actuating elements (52, 70; 116, 118) and at least one support section is arranged on the rotatable adjustment means (66; 106) spaced apart from the axis of rotation.

6. The air-guiding element according to one of the preceding claims, wherein the air-guiding element (12) has a closing element (36) on the first end section (22) and/or the second end section (24).

7. The air-guiding element according to claim 6, wherein the first support element (96) is accommodated in the closing element (36).

8. The air-guiding element according to one of the preceding claims, wherein the second end section (24) is supported by at least one rotatable second support element or the second end section (24) is supported between two rotatably mounted second support elements.

9. The air-guiding element according to claim 8, wherein the at least one second support element is a roller or a roll (102).

10. The air-guiding element according to one of the preceding claims, wherein at least one actuating element (72) has a non-linear course, extending in the state of the air-guiding element not being subject to application of force essentially in the air-guiding element or in a plane parallel to the air-guiding element.

11. The air-guiding element according to one of the preceding claims, wherein the air-guiding element (12) is connected with at least one further air-guiding element (14) via a coupling device, an adjustment means, or an adjustment device.

12. The air-guiding element according to one of the preceding claims, wherein the air-guiding element (12; 110) is an air-guiding element (12; 11) of an air outlet (10) of a motor vehicle.

13. An air outlet (10) for a motor vehicle, having at least one air-guiding element according to one of the preceding claims.

## Revendications

1. Élément de guidage d'air (12, 110) constitué d'un matériau flexible, l'élément de guidage d'air (12, 110) comportant une première partie terminale (22) logée dans un boîtier et au moins la deuxième partie terminale (24) opposée à la première partie terminale (22) étant en appui dans le boîtier, de sorte que par l'action de force d'au moins une composante de force sur une zone (26; 34) de l'élément de guidage d'air (12, 110), l'élément de guidage d'air (12, 110) se déforme au moins dans cette zone (26; 34) et l'élément de guidage d'air (12, 110) revient automatiquement dans sa position initiale après la fin de l'action de la force, **caractérisé en ce que** ladite zone (26; 34) est agencée entre la première partie terminale (22) et la deuxième partie terminale (24) et **en ce que**, en outre, entre la première partie et la deuxième parties terminales (22, 24), au moins deux éléments d'actionnement (52, 70; 116, 118) sont agencés en étant espacés l'un de l'autre sur ou dans l'élément de guidage d'air (12, 110) et des parties de support des éléments d'actionnement (52, 70; 116, 118) font saillie de l'élément de guidage d'air (110) et sont reliés avec au moins un moyen d'ajustement (66; 106) ou un dispositif d'ajustement.

2. Élément de guidage d'air selon la revendication précédente, dans lequel la deuxième partie terminale (24) est montée dans un réceptacle (20) de façon à pouvoir être déplacée.

3. Élément de guidage d'air selon l'une des revendications précédentes, dans lequel la première partie terminale (22) est montée au moyen d'un premier élément de support (96) et le premier élément de support (96) est monté dans au moins un réceptacle de manière pivotante ou rotative dans la première partie terminale (22).

4. Élément de guidage d'air selon l'une des revendications précédentes, dans lequel l'élément d'actionnement (52; 70) comporte des parties de support, au moins les parties de support tournent de manière essentiellement parallèle à la première partie terminale (22).

5. Élément de guidage d'air selon l'une des revendications précédentes, dans lequel le au moins un moyen d'ajustement est un moyen d'ajustement (66; 106) rotatif autour d'un axe de rotation s'étendant de manière parallèle à la première partie terminale (22), dans lequel deux parties de support des au moins deux éléments d'actionnement (52, 70; 116, 118) sont reliées au moyen d'ajustement (66; 106) en étant espacées l'une de l'autre et au moins une partie de support est agencée au moyen d'ajustement rotatif (66; 106) en étant espacée de l'axe de rotation.

6. Élément de guidage d'air selon l'une des revendications précédentes, l'élément de guidage d'air (12) comportant un élément terminal (36) sur la première partie terminale (22) et/ou sur la deuxième partie terminale (24).

7. Élément de guidage d'air selon la revendication 6, le premier élément de support (96) étant réceptionné dans l'élément terminal (36).

8. Élément de guidage d'air selon l'une des revendications précédentes, dans lequel la deuxième partie terminale (24) est en appui sur au moins un deuxième élément de support rotatif ou la deuxième partie terminale (24) est en appui entre deux deuxièmes éléments de support montés de manière rotative.

9. Élément de guidage d'air selon la revendication 8, dans lequel le au moins un deuxième élément de support est un rouleau ou un cylindre (102).

10. Élément de guidage d'air selon l'une des revendications précédentes, dans lequel au moins un élément d'actionnement (72) présente un cours non-linéaire, qui s'étend dans l'état de l'élément de guidage d'air sans l'action d'une force essentiellement dans l'élément de guidage d'air ou dans un plan parallèle à l'élément de guidage d'air.

11. Élément de guidage d'air selon l'une des revendications précédentes, l'élément de guidage d'air (12) étant relié avec au moins un autre élément de guidage d'air (14) à travers un dispositif de couplage, un moyen d'ajustement ou un dispositif d'ajustement.

12. Élément de guidage d'air selon l'une des revendications précédentes, l'élément de guidage d'air (12; 110) étant un élément de guidage d'air (12; 11) d'un dispositif d'écoulement d'air (10) d'un véhicule automobile.

13. Dispositif d'écoulement d'air (10) pour un véhicule automobile, comportant au moins un élément de guidage d'air selon l'une des revendications précédentes.
